# EUROPÄISCHE PATENTSCHRIFT

(11) **EP 2 179 006 B1**
(45) Veröffentlichungstag und Bekanntmachung des Hinweises auf die Patenterteilung: **01.07.2020**
(21) Anmeldenummer: 09711244.5
(22) Anmeldetag: 07.01.2009
(51) Int. Cl.: C09K 11/00

(54) **ANORGANISCH-ORGANISCHER KOMPOSITLEUCHTSTOFF**
INORGANIC-ORGANIC COMPOSITE FLUORESCENT SUBSTANCE
SUBSTANCE LUMINESCENTE COMPOSITE INORGANIQUE-ORGANIQUE

(30) Priorität: 16.02.2008 DE 102008009541
(43) Veröffentlichungstag der Anmeldung: 28.04.2010
(73) Patentinhaber: Karlsruher Institut für Technologie, 76131 Karlsruhe (DE)
(72) Erfinder: FELDMANN, Claus, 76275 Ettlingen (DE); ROMING, Marcus, 77761 Schiltach (DE)
(74) Vertreter: Müller-Boré & Partner Patentanwälte PartG mbB
(86) Internationale Anmeldenummer: PCT/EP2009/000040
(87) Internationale Veröffentlichungsnummer: WO 2009/100800

(56) Entgegenhaltungen:
- US-A1- 2005 120 917
- L.T. KUBOTA, L. GORTON: "Electrochemical study of flavins, phenazines, phenoxazines and phenothiazines immobilized on zirconium phosphate" ELECTROANAYSIS, Bd. 11, Nr. 10-11, 1999, Seiten 719-728, XP002517962
- OCANA M ET AL: "Preparation and optical properties of spherical metal oxide particles containing fluorescent dyes" JOURNAL OF NON-CRYSTALLINE SOLIDS, NORTH-HOLLAND PHYSICS PUBLISHING. AMSTERDAM, NL, Bd. 147-148, 1. Januar 1992 (1992-01-01), Seiten 621-626, XP022755378 ISSN: 0022-3093 [gefunden am 1992-01-01]
- A. ANEDDA ET.AL.: "Rhodamine 6G-SiO2 hybrids: a photoluminescence study" JOURNAL OF NON-CRYSTALLINE SOLIDS, Bd. 351, 2005, Seiten 1850-1854, XP002517963
- Gian Gaetano Aloisi ET AL: "Preparation and spectroscopic characterisation of intercalation compounds of [alpha]-zirconium phosphate with Rhodamine B", MOLECULAR CRYSTALS AND LIQUID CRYSTALS SCIENCE AND TECHNOLOGY, SECTION A: MOLECULAR CRYSTALS AND LIQUID CRYSTALS , 349, 315-318 CODEN: MCLCE9; ISSN: 1058-725X, vol. 311, no. 1, 1 March 1998 (1998-03-01) , pages 245-250, XP55614003, ISSN: 1058-725X, DOI: 10.1080/10587259808042393
- KUMAR C V ET AL: "Probing the donor and acceptor dye assemblies at the galleries of @a-zirconium phosphate", MICROPOROUS AND MESOPOROUS MATER, ELSEVIER, AMSTERDAM, NL, vol. 41, no. 1-3, 1 December 2000 (2000-12-01), pages 307-318, XP004220854, ISSN: 1387-1811, DOI: 10.1016/S1387-1811(00)00307-3
- Jan W. Stouwdam ET AL: "Improvement in the Luminescence Properties and Processability of LaF 3 /Ln and LaPO 4 /Ln Nanoparticles by Surface Modification", Langmuir, vol. 20, no. 26, 1 December 2004 (2004-12-01), pages 11763-11771, XP55613996, US ISSN: 0743-7463, DOI: 10.1021/la048379g

## Beschreibung

Die vorliegende Erfindung betrifft einen Kompositleuchtstoff, umfassend eine anorganische Matrix und einen organischen Fluoreszenzfarbstoff, wobei die anorganische Matrix aus einer Verbindung, ausgewählt aus CaCO₃, LaPO₄, ZrO(HPO₄), ZrO(H₂PO₄)₂, und Zr₃(PO₄)₄, einschließlich Zr(HPO₄)₂ bzw. Zr(H₂PO₄)₄, aufgebaut ist, und wobei der organische Fluoreszenzfarbstoff eine oder mehrere funktionelle Gruppen, ausgewählt aus Sulfatgruppen, Phosphatgruppen, Phosphonsäuregruppen, Phosphansäuregruppen oder Carboxylatgruppen, aufweist, über welche der Fluoreszenzfarbstoff mittels ionischer Bindung in die anorganische Matrix eingebaut ist, und wobei der organische Fluoreszenzfarbstoff aus der Gruppe, bestehend aus Riboflavin-5'-monophosphatnatriumsalz, Perylen, Cumarin und Umbelliferon, wobei letztere mit mindestens einer Sulfatgruppe, Phosphatgruppe, Phosphonsäuregruppe, Phosphansäuregruppe oder Carboxylatgruppe funktionalisiert worden sind, ausgewählt ist. Ferner betrifft die vorliegende Erfindung ein Verfahren zur Herstellung eines solchen Kompositleuchtstoffes sowie dessen Verwendung.

Leuchtstoffpartikel bzw. Leuchtstoffe (engl, "phosphors") finden vielfältige Anwendung in Lampen bzw. zur Beleuchtung (beispielsweise in Fluoreszenzlampen, Kompaktfluoreszenzlampen, Sonnenbanklampen, Leuchtdioden), in Bildschirmen (beispielsweise Kathodenstrahlröhren, Plasma-Anzeigeelemente, Feldemissions-Anzeigeelemente) oder zur Detektion hochenergetischer Strahlung (beispielsweise in Röntgendetektoren, in Bildplatten, zur Tomographie). Dabei weisen herkömmliche Leuchtstoffpartikel üblicherweise einen Partikeldurchmesser von mehr als 1 µm auf.

Besonderes Interesse finden Leuchtstoffpartikel mit Partikeldurchmessern von weniger als 100 nm (sogenannte nanoskalige Leuchtstoffe) derzeit jedoch in Anwendungsbereichen, die mit herkömmlichen Leuchtstoffpartikeln mit Partikeldurchmessern von mehr als 1 µm nicht realisierbar sind. Dies gilt insbesondere für transparente lumineszierende Schichten oder Markierungen auf Glas-, Papier-, Metall- oder Kunststoffsubstraten (beispielsweise als Sicherheitsmerkmal auf Banknoten oder Ausweispapieren), transparente lumineszierende Füllstoffe in transparenten Matrices (beispielsweise Glas- oder Kunststoffmatrices) oder biologisch-medizinische Anwendungen, beispielsweise in der Diagnostik und Therapie von Tumorerkrankungen, der Zellmarkierung oder in Fluoreszenzresonanz-Energietransfer-Assays (FRET-Assays). Bei den vorstehend erwähnten klassischen Anwendungen im Display- bzw. Lampensektor könnten solche Leuchtstoffpartikel mit Partikeldurchmessern von weniger als 100 nm im Hinblick auf eine Materialersparnis und Miniaturisierung von Interesse werden.

Um jedoch lumineszierende Nanokristalle mit Partikeldurchmessern von weniger als 100 nm und höchster Qualität zu erhalten, ist zum einen die Reaktionsführung bei erhöhter Temperatur (üblicherweise im Bereich von 150°C bis 250°C) erforderlich, um die Zahl der Gitterdefekte zu minimieren. Zum anderen ist die Verwendung von stark-koordinierenden Lösungsmitteln oder Stabilisatoren während der Synthese für die Steuerung der Partikelgröße, die Kontrolle des Agglomerationsgrads, die Abschirmung der Partikeloberflächen sowie die Erhöhung der chemisch-physikalischen Stabilität wesentlich. Zudem weisen die derart erhaltenen Leuchtstoffpartikel in der Regel Defekte oder eine amorphe Oberfläche auf, was zu einer deutlichen Verringerung der Quantenausbeute führt. Zur Erhöhung der Quantenausbeute dieser derart erhaltenen Leuchtstoffpartikel kann eine anorganische, nicht lumineszierende Hülle bzw. Schale um die Leuchtstoffpartikel unter Bildung einer Kern-Schale-Struktur vorgesehen werden (vgl. beispielsweise H. Kömpe, H. Borchert, J. Storz, A. Lobo, S. Adam, T. Möller, M. Haase, Angew. Chem. 2003, 115, 5672).

Im Stand der Technik sind bisher drei unterschiedliche Gruppen von nanoskaligen Leuchtstoffen bekannt, nämlich (i) nanoskalige Halbleiterpartikel bzw. Quantenpunkte, (ii) dotierte nanoskalige Leuchtstoffe und (iii) nicht lumineszierende Nanopartikel, auf deren Oberfläche organische Fluoreszenzfarbstoffe aufgebracht sind.

Als nanoskalige Halbleiterpartikel sind bisher im Wesentlichen II-VI-Halbleitermaterialien wie beispielsweise ZnS, CdS, CdSe oder CdTe, sowie III-V-Halbleiterpartikel wie beispielsweise AIN, GaN, GaP, GaAs, InN, InP, InAs oder InSb bekannt. Solche Halbleiter-Leuchtstoffpartikel werden auch als Quantenpunkte (engl. "quantum dots") bezeichnet (vgl. beispielsweise X. Peng, L. Manna, W. Yang, J. Wickham, E. Scher, A. Kadavanich, A. P. Alivisatos, Nature 2000, 404, 59*;* T. Vossmeyer, L. Katsikas, M. Giersig, I. G. Popov, K. Diesner, A. Chemseddine, A. Eychmüller, H. Weller, J. Phys. Chem. 1994, 98, 7665; C. B. Murray, D. J. Norris, M. G. Bawendi, J. Am. Chem. Soc. 1993, 115, 8706; M. T. Harrison, S. V. Kershaw, A. L. Rogach, A. Kornowski, A. Eychmüller, H. Weller, Adv. Mater. 2000, 12, 123; S. Steckel, J. P. Zimmer, S. Coe-Sullivan, N. E. Scott, V. Bulovic, M. G. Bawendi, Angew. Chem. 2004, 116, 2206; Angew. Chem. Int. Ed. 2004, 43, 2154). Gemäß dem Stand der Technik können derartige Leuchtstoffe auch in Form von Kern-Schale-Strukturen verwendet werden (beispielsweise CdS@ZnSe oder InP@InN).

Diese Systeme weisen allerdings verschiedene Nachteile und Einschränkungen auf. So ist die chemische Synthese nanoskaliger Halbleiterpartikel vergleichsweise aufwendig, da Schutzgasbedingungen, mehrstufige Synthesen und die Kontrolle sowie die Selektion der Partikelgrößen notwendig sind. Darüber hinaus sind Halbleiterpartikel nur in vergleichsweise geringen Substanzmengen zugänglich. Außerdem müssen bei der Synthese zum Teil stark toxische Substanzen verwendet werden. Zudem enthalten die Partikel dann auch zum Teil stark toxische Elemente wie Cd, Se oder Te. Darüber hinaus sind diese Substanzen in der Regel auch empfindlich gegen Hydrolyse, Oxidation und/oder thermische Behandlung (selbst unter physiologischen Bedingungen). Zur Stabilisierung dieser Systeme gegen Hydrolyse und Oxidation bzw. zur Unterbindung strahlungsloser Relaxationsprozesse sind aufwendige Oberflächenmodifikationen (beispielsweise durch Verwendung von Kern-Schale-Strukturen oder durch Bedeckung mit speziellen Oberflächenstabilisatoren) erforderlich. Eine weitere Einschränkung stellt die Abhängigkeit der Lumineszenzeigenschaften (insbesondere der Absorption und Emission) von der Partikelgröße dar (der sogenannte "Quantum-Size Effekt"). Hierfür sind exakt definierte Partikeldurchmesser mit einer Genauigkeit von ±1 nm erforderlich, was die Synthese aufwendiger macht und die Ausbeute im Allgemeinen beschränkt.

Dotierte nanoskalige Leuchtstoffe (wie beispielsweise LaPO₄:Ce,Tb, Y₂O₃:Eu, YVO₄:Eu, ZnS:Mn) stellen eine wichtige Alternative zu Halbleiter-Leuchtstoffpartikeln dar (vgl. beispielsweise C. Feldmann, Adv. Funct. Mater. 2003, 13, 101; K. Riwotzki, H. Meyssamy, H. Schnablegger, A. Kornowski, M. Haase, Angew. Chem. 2001, 113, 574; Angew. Chem. Int. Ed. 2001, 40, 573; G. Bühler, C. Feldmann, Angew. Chem. 2006, 118, 4982; Angew. Chem. Int. Ed. 2006, 45, 4864; J. W. Stouwdam, F. C. J. M. van Veggel, Langmuir 2004, 20, 11763; K. Kömpe, H. Borchert, J. Storz, A. Lobo, S. Adam, T. Möller, M. Haase, Angew. Chem. 2003, 115, 5672; Angew. Chem. Int. Ed. 2003, 42, 5513). Auch hier werden in der Regel Kern-Schale-Strukturen verwendet (beispielsweise LaPO₄:Ce, Tb@LaPO₄, ZnS:Mn@ZnS, LaF₃:Eu@LaF₃).

Aber auch diese Systeme weisen verschiedene Nachteile bzw. Einschränkungen auf. So ist die chemische Synthese dotierter nanoskaliger Leuchtstoffe ebenfalls recht aufwendig, da Schutzgasbedingungen, mehrstufige Synthesen und die Kontrolle sowie die Selektion der Partikelgrößen notwendig sind. Ferner sind die Materialien nur in vergleichsweise geringen Mengen zugänglich. Die häufig verwendeten Lanthanoid-Elemente sind zudem äußerst kostenintensiv. Ebenso wie bei den nanoskaligen Halbleiterpartikeln sind die dotierten nanoskaligen Leuchtstoffe in der Regel empfindlich gegen Hydrolyse, Oxidation und/oder thermische Behandlung. Zur Stabilisierung dieser Systeme gegen Hydrolyse und Oxidation bzw. zur Unterbindung strahlungsloser Relaxationsprozesse sind aufwendige Oberflächenmodifikationen erforderlich. Weiter liegen die Quantenausbeuten von dotierten nanoskaligen Leuchtstoffen im Allgemeinen unterhalb von 30%. Zwar weisen Kern-Schale-Strukturen höhere Quantenausbeuten auf, doch erhöht sich damit der Syntheseaufwand erheblich. Darüber hinaus setzen hohe Quantenausbeuten als notwendige Voraussetzung hochkristalline, defektfreie Nanopartikel voraus. Weiterhin muss für jeweils unterschiedliche Anregungs- und Emissionsbedingungen ein anderes Leuchtstoffsystem mit jeweils anderer chemischer Zusammensetzung verwendet werden.

Als dritte Gruppe von nanoskaligen Leuchtstoffen sind nicht lumineszierende Nanopartikel, auf deren Oberfläche organische Fluoreszenzfarbstoffe aufgebracht sind, bekannt. Dabei werden organische Fluoreszenzfarbstoffe (beispielsweise Phenoxazine, Nilrot, Rhodamin) auf der Oberfläche nicht lumineszierender Nanopartikel wie beispielsweise SiO₂, Al₂O₃ oder TiO₂ chemisch gebunden (vgl. beispielsweise A. B. Descalzo, M. D. Marcos, C. Monte, R. Martinez-Manez, K. Rurack, J. Mater. Chem. 2007, 17, 4716; M. L. Ferrer, F. del Monte, J. Phys. Chem. B 2005, 109, 80; C. Konstantinos, D. B. Mitzi, US-Patent 6,420,056; A. Malinauskas, T. Ruzgas, L. Gorton, Bioelectrochem. Bioenergetics 1999, 49, 21; Y. Cao, J. Cao, M. Zheng, J. Liu, G. Ji, H. Ji, J. Nanosci. Nanotechnol. 2007, 7, 504).

Aber auch die Synthese dieser Nanopartikel ist wiederum vergleichsweise aufwendig, da zunächst die Nanopartikel hergestellt und nachfolgend die organischen Fluoreszenzfarbstoffe auf der Oberfläche verankert werden müssen. Dabei ist die Haftung der organischen Fluoreszenzfarbstoffe auf der Oberfläche der Nanopartikel allerdings häufig eingeschränkt und schon die Zugabe von Säuren/Basen kann die Freisetzung der organischen Fluoreszenzfarbstoffe bedingen. Außerdem können die organischen Fluoreszenzfarbstoffe durch Einwirkung von Chemikalien, wie Säuren, Basen oder redoxaktiven Substanzen, oder durch Einwirkung von UV-Strahlung oder Wärme verändert oder zerstört werden. Darüber hinaus können derartige Komposite mit einem organischen Fluoreszenzfarbstoff auf der Oberfläche einer nicht lumineszierenden anorganischen Matrix als mesoporöse Netzwerke mit vollständig aggregierten und nicht mehr separierbaren Nanopartikeln vorliegen. Außerdem werden die Oberflächeneigenschaften der Nanopartikel durch die organischen Fluoreszenzfarbstoffe bestimmt, was unter Umständen zu einer Einschränkung der Dispergierbarkeit in polaren oder unpolaren Dispersionsmitteln führen kann. Schließlich ist die Lumineszenzintensität durch die vergleichsweise geringe Anzahl an Lumineszenzzentren pro Volumeneinheit (aufgrund eines nicht lumineszierenden Kerns und einer geringen Anzahl an Fluoreszenzfarbstoffmolekülen auf der Oberfläche) gering.

Der vorliegenden Erfindung liegt daher die Aufgabe zugrunde, die vorstehend genannten Nachteile von im Stand der Technik bekannten nanoskaligen Leuchtstoffen zu überwinden und einen nanoskaligen Leuchtstoff bereitzustellen, der deutlich unempfindlicher gegen Hydrolyse sowie Einwirkung von Säuren, Basen, redoxaktiven Substanzen und Wärme als herkömmliche Leuchtstoffe ist, ohne dass eine aufwendige Oberflächenmodifikation notwendig ist, der eine große Lumineszenzintensität und hohe Quantenausbeuten aufweist, und von dem größere Substanzmengen durch eine einfache Synthesestrategie leicht zugänglich sind, ohne dass die Verwendung kostenintensiver oder toxischer Chemikalien bzw. Elemente erforderlich ist. Darüber hinaus sollte der nanoskalige Leuchtstoff mit einer einheitlichen Partikelgröße und -morphologie agglomeratfrei hergestellt und ebenfalls agglomeratfrei in unterschiedlichen Flüssigphasen redispergiert werden können.

Gian Gaetano Aloisi et al, Mol. Cryst. Liq. Cryst., 1998, Vol. 311, pp. 245-250, beschreibt Interkalationsverbindungen von α-Zirkoniumphosphat mit Rhodamin B. Challa V. Kumar et al., Microporous and Mesoporous Materials 41 (2000), pp. 307-318, beschreibt die Interkalation von Rhodamin B in α-Zirkoniumphosphat unter Einsatz von langkettigen kationischen, grenzflächenaktiven Mitteln wie Cetyltrimethylammoniumbromid.

Diese Aufgabe wird durch die in den Ansprüchen gekennzeichneten Ausführungsformen gelöst.

Insbesondere wird ein Kompositleuchtstoff bereitgestellt, umfassend eine anorganische Matrix und einen organischen Fluoreszenzfarbstoff,
wobei die anorganische Matrix aus einer Verbindung, ausgewählt aus CaCO₃, LaPO₄, ZrO(HPO₄), ZrO(H₂PO₄)₂, und Zr₃(PO₄)₄, einschließlich Zr(HPO₄)₂ bzw. Zr(H₂PO₄)₄, aufgebaut ist, und
wobei der organische Fluoreszenzfarbstoff eine oder mehrere funktionelle Gruppen, ausgewählt aus Sulfatgruppen, Phosphatgruppen, Phosphonsäuregruppen, Phosphansäuregruppen oder Carboxylatgruppen, aufweist, über welche der Fluoreszenzfarbstoff mittels ionischer Bindung in die anorganische Matrix eingebaut ist, und
wobei der organische Fluoreszenzfarbstoff aus der Gruppe, bestehend aus Riboflavin-5'-monophosphatnatriumsalz, Perylen, Cumarin und Umbelliferon, wobei letztere mit mindestens einer Sulfatgruppe, Phosphatgruppe, Phosphonsäuregruppe, Phosphansäuregruppe oder Carboxylatgruppe funktionalisiert worden sind, ausgewählt ist.

Im Rahmen der vorliegenden Erfindung wird unter dem Begriff "anorganische Matrix" ein anorganischer Feststoff verstanden, der als Trägermaterial dient und an die ein oder mehrere Substanzen chemisch angebunden werden können. Erfindungsgemäß ist die anorganische Matrix aus einer Verbindung, ausgewählt aus CaCO₃, LaPO₄, ZrO(HPO₄), ZrO(H₂PO₄)₂ und Zr₃(PO₄)₄, einschließlich Zr(HPO₄)₂ bzw. Zr(H₂PO₄)₄, aufgebaut.

Die anorganische Verbindung ist im Allgemeinen schwerlöslich. Im Rahmen der vorliegenden Erfindung werden unter schwerlöslichen Verbindungen solche Verbindungen verstanden, die eine molare Löslichkeit von ≤ 10⁻² mol/l aufweisen. Vorzugsweise weisen die schwerlöslichen Verbindungen eine molare Löslichkeit von ≤ 10⁻⁴ mol/l auf. Dies ist hinsichtlich der Synthese des erfindungsgemäßen Kompositleuchtstoffes vorteilhaft, da sich so die anorganische Matrix zusammen mit dem organischen Fluoreszenzfarbstoff aus löslichen Vorläuferverbindungen ausfällen lässt.

Der erfindungsgemäße Kompositleuchtstoff hat den Vorteil, dass die anorganische Matrix aus im Wesentlichen wenig toxischen anorganischen Verbindungen aufgebaut ist. Im Gegensatz dazu umfassen die im Stand der Technik beschriebenen Leuchtstoffe häufig toxische Elemente wie beispielsweise Cd, Se oder Te.

Die anorganische Matrix kann entweder eine kristalline Struktur oder eine nichtkristalline bzw. röntgenamorphe Struktur aufweisen. In einer bevorzugten Ausführungsform der vorliegenden Erfindung weist die anorganische Matrix eine kristalline Struktur auf. Dies ist insbesondere hinsichtlich der Quantenausbeute der Leuchtstoffteilchen vorteilhaft. In einer anderen bevorzugten Ausführungsform weist die anorganische Matrix eine röntgenamorphe Struktur auf. Dies ist hinsichtlich einer vereinfachten Synthese vorteilhaft, da amorphe Nanopartikel ohne größeren synthetischen Aufwand erhalten werden können.

In einer bevorzugten Ausführungsform der vorliegenden Erfindung ist die anorganische Matrix weiter mit einem oder mehreren Kationen und/oder Anionen dotiert. Durch eine Dotierung der Matrix ist es möglich, die Lumineszenzeigenschaften des erfindungsgemäßen Leuchtstoffes zu modifizieren, da nach Anregung des organischen Fluoreszenzfarbstoffes ein vollständiger oder partieller Energieübertrag auf die Dotierung erfolgt, so dass nachfolgend eine von der Dotierung stammende Emission zu beobachten ist. Es ist weiterhin möglich, dass die Dotierung eine veränderte Anregung des erfindungsgemäßen Kompositleuchtstoffes bewirkt. Die Dotierung kann in jedem geeigneten Konzentrationsbereich erfolgen. Vorzugsweise liegt die Dotierung in einem Konzentrationsbereich von 5 ppm bis 50 mol-% vor, besonders bevorzugt in einem Konzentrationsbereich von 0,1 bis 5,0 mol-%. Die anorganische Matrix ist vorzugsweise mit einem Lanthanoid, ausgewählt aus Ce, Pr, Nd, Sm, Eu, Gd, Tb, Dy, Ho, Er, Tm, Yb oder Lu, einem Übergangsmetall, ausgewählt aus Cr, Mn, Cu, Zn, Y, Ag oder Cd, einem Hauptgruppenelement, ausgewählt aus Sn, Sb, Pb oder Bi, oder einem komplexen Anion, ausgewählt aus [VO₄]³⁻, [MoO₄]³⁻ oder [WO₄]³⁻ , dotiert.

Der erfindungsgemäße Kompositleuchtstoff umfasst weiterhin einen organischen Fluoreszenzfarbstoff, welcher eine oder mehrere funktionelle Gruppen, ausgewählt aus Sulfatgruppen, Phosphatgruppen, Phosphonsäuregruppen, Phosphansäuregruppen und Carboxylatgruppen, aufweist, über welche der Fluoreszenzfarbstoff in die anorganische Matrix eingebaut ist. Erfindungsgemäß ist der organische Fluoreszenzfarbstoff aus der Gruppe, bestehend aus Riboflavin-5'-monophosphatnatriumsalz, Perylen, Cumarin und Umbelliferon, wobei letztere mit mindestens einer Sulfatgruppe, Phosphatgruppe, Phosphonsäuregruppe, Phosphansäuregruppe oder Carboxylatgruppe funktionalisiert worden sind, ausgewählt. Entsprechende Verfahren zum Funktionalisieren von solchen organischen Fluoreszenzfarbstoffen sind dem Fachmann bekannt.

Der Einbau des organischen Fluoreszenzfarbstoffes in die anorganische Matrix erfolgt über die funktionellen Gruppen des Fluoreszenzfarbstoffes. Der organische Fluoreszenzfarbstoff ist über eine oder mehrere chemische Bindungen an die anorganische Matrix gebunden, wobei die chemische Bindung eine ionische Bindung ist. Besonders bevorzugt ist die funktionelle Gruppe, über welche der Fluoreszenzfarbstoff in die anorganische Matrix eingebaut ist, aus der Gruppe, bestehend aus -COOH, -P(O)₂OH, -OP(O)₂OH, -S(O)₂OH bzw. deren Anionen, ausgewählt. Die Verwendung eines Fluoreszenzfarbstoffes mit diesen funktionellen Gruppen ist insbesondere vorteilhaft in Verbindung mit einer anorganischen Matrix, die aus einer Verbindung, ausgewählt aus der vorstehenden Gruppe, aufgebaut ist.

Gemäß der vorliegenden Erfindung können ein oder mehrere organische Fluoreszenzfarbstoffe im erfindungsgemäßen Kompositfarbstoff enthalten sein. Auf diese Weise können jeweils unterschiedliche Anregungs- und Emissionsbedingungen bei gleicher anorganischer Matrix eingestellt werden, wobei lediglich der organische Fluoreszenzfarbstoff oder die organischen Fluoreszenzfarbstoffe entsprechend gewählt und eingebaut werden müssen.

Der erfindungsgemäße Leuchtstoff kann jede geeignete Partikelgröße aufweisen. In einer bevorzugten Ausführungsform ist der erfindungsgemäße Leuchtstoff nanoskalig und weist einen Partikeldurchmesser im Bereich von 1 bis 100 nm auf. Besonders bevorzugt ist ein Partikeldurchmesser im Bereich von 1 bis 20 nm. Darüber hinaus weist der erfindungsgemäße Leuchtstoff vorzugsweise eine nahezu monodisperse Größenverteilung im Bereich von ±30%, besonders bevorzugt im Bereich von ±5%, auf. Weiterhin weist der erfindungsgemäße Kompositleuchtstoff vorzugsweise einen geringen Agglomerationsgrad auf, besonders bevorzugt mit einer Größenverteilung im Bereich von ±30%, noch mehr bevorzugt im Bereich von ±5%, auf. Im Stand der Technik sind geeignete Verfahren zur Bestimmung des Partikeldurchmessers und der monodispersen Größenverteilung bekannt.

In einer weiteren Ausführungsform weist die anorganische Matrix des erfindungsgemäßen Kompositleuchtstoffes eine Kern-Schale-Struktur auf. Dabei ist besonders es bevorzugt, dass der Kern den organischen Fluoreszenzfarbstoff enthält, während die Schale keinen organischen Fluoreszenzfarbstoff enthält. Schale und Kern können einerseits aus der gleichen anorganischen Verbindung, andererseits aus verschiedenen anorganischen Verbindungen aufgebaut sein. Die Verwendung einer Kern-Schale-Struktur ist bei dem erfindungsgemäßen Kompositleuchtstoff hinsichtlich einer Erhöhung der Hydrolysestabilität vorteilhaft. So kann durch das Aufbringen einer Schale aus einer anorganischen Verbindung wirksam verhindert werden, dass die Bindung, über welche der Fluoreszenzfarbstoff an die anorganische Matrix gebunden ist, hydrolysiert wird und anschließend der Fluoreszenzfarbstoff aus dem Kern des erfindungsgemäßen Kompositleuchtstoffes allmählich herausgewaschen wird.

Üblicherweise entspricht die Quantenausbeute des erfindungsgemäßen Kompositleuchtstoffes im Wesentlichen der Quantenausbeute des in dem Kompositleuchtstoff enthaltenen organischen Fluoreszenzfarbstoffes in dessen ungebundener Form. Im Vergleich zu einem entsprechenden Oberflächen-modifizierten Leuchtstoffpartikel weist der erfindungsgemäße Kompositleuchtstoff daher den Vorteil einer erhöhten Quantenausbeute auf. So ist die Quantenausbeute (d.h. das Verhältnis der Anzahl der emittierten Photonen zur Anzahl der absorbierten Photonen) für den Kompositleuchtstoff im Wesentlichen durch den Fluoreszenzfarbstoff bedingt. Befindet sich dieser, wie bei den Oberflächen-modifizierten Leuchtstoffpartikeln, nur an der Oberfläche, so ist die Quantenausbeute typischerweise durch Oberflächendefekte um bis zu 5% verringert. Entscheidender Vorteil des erfindungsgemäßen Kompositleuchtstoffes ist demgegenüber die erheblich höhere Konzentration an Fluoreszenzfarbstoff und damit an Fluoreszenzzentren, so dass die Gesamtzahl der Photonen und damit die Lichtintensität bzw. Lumineszenzintensität erheblich höher ist. Auf diese Weise kann ein deutlich besserer Kontrast erreicht werden. Darüber hinaus ist die Verwendung von organischen Fluoreszenzfarbstoffen in dem erfindungsgemäßen Kompositleuchtstoff aufgrund der generell höheren Quantenausbeuten im Vergleich zu dotierten nanoskaligen Leuchtstoffen vorteilhaft.

Gemäß der vorliegenden Erfindung können jeweils unterschiedliche Anregungs- und Emissionseigenschaften bei gleicher anorganischer Matrix durch die Wahl und den Einbau eines entsprechenden organischen Fluoreszenzfarbstoffes eingestellt werden. Vorzugsweise liegt die Anregung des erfindungsgemäßen Kompositleuchtstoffes im Bereich von 100 bis 800 nm und die Emission im Bereich von 200 bis 2000 nm. In der Regel erfolgt eine Anregung durch eine Leuchtdiode, welche blaues Licht emittiert (d.h. 350 bis 480 nm) und eine Emission des organischen Fluoreszenzfarbstoffes bzw. des erfindungsgemäßen Kompositleuchtstoffes im sichtbaren Spektralbereich zwischen blau und rot (d.h. 480 bis 780 nm). In einer anderen Ausführungsform erfolgt die Anregung in Form von UV-Licht (d.h. 100 bis 380 nm). Vorzugsweise nimmt bei dem erfindungsgemäßen Kompositleuchtstoff die Lumineszenzintensität unter Anregungsbedingungen über die Dauer der Anregung im Vergleich zu dem ungebundenen organischen Fluoreszenzfarbstoff weniger stark ab, besonders bevorzugt nimmt die Lumineszenzintensität über die Dauer der Anregung nicht ab, insbesondere bei Anregung mit einer Leuchtdiode. So nimmt bei Einwirkung mit UV-Licht die Lumineszenzintensität vorzugsweise um nicht mehr als 10% ab, bei Einwirkung mit Tageslicht um nicht mehr als 1%.

Die vorliegende Erfindung betrifft ferner ein Verfahren zur Herstellung des erfindungsgemäßen Kompositleuchtstoffes, umfassend die Schritte
(a) das Bereitstellen einer Lösung eines organischen Fluoreszenzfarbstoffes, der eine oder mehrere funktionelle Gruppen, ausgewählt aus Sulfatgruppen, Phosphatgruppen, Phosphonsäuregruppen, Phosphansäuregruppen oder Carboxylatgruppen, aufweist, wobei die Lösung gegebenenfalls weiter mindestens ein Anion, ausgewählt aus Sulfat, Phosphat, Carbonat oder Carboxylat enthält,
(b) das Bereitstellen einer Lösung eines löslichen Metallsalzes, enthaltend Metallkationen, die gleich oder verschieden sein können und aus Ca, La, und Zr ausgewählt sind,
(c) das Vereinigen der beiden Lösungen unter Rühren, um den Kompositleuchtstoff auszufällen, und
(d) das Isolieren und/oder Aufreinigen des ausgefällten Kompositleuchtstoffes.

Der Schritt (a) des erfindungsgemäßen Verfahrens umfasst das Bereitstellen einer Lösung des organischen Fluoreszenzfarbstoffes. Dieser wurde bereits vorstehend beschrieben. Ferner kann diese Lösung gegebenenfalls weiter mindestens ein Anion, ausgewählt aus Sulfat, Phosphat, Carbonat oder Carboxylat, enthalten.

Beispielsweise bedarf eines solchen Anions nicht, wenn als lösliches Metallsalz in Schritt (b) des erfindungsgemäßen Verfahrens ZrOCl₂ eingesetzt wird. Wenn eingesetzt, so kann dieses Anion zusammen mit einem Kation in der Form eines gelösten Salzes vorliegen, beispielsweise als gelöstes Alkalimetallsulfat, Alkalimetallphosphat, Alkalimetallcarboxylat oder Alkalimetallcarbonat. Vorzugsweise handelt es sich bei dem Alkalimetall um Natrium oder Kalium. Das Anion kann auch in Form der korrespondierenden Säure in der Lösung vorliegen. In einer Ausführungsform der vorliegenden Erfindung enthält die Lösung zur Bereitstellung eines der vorstehend genannten Anionen eine Säure, ausgewählt aus der Gruppe, bestehend aus Schwefelsäure, Phosphorsäure oder einer Carbonsäure. Bei der Carbonsäure handelt es sich vorzugsweise um Ameisensäure, Essigsäure, Propionsäure oder Oxalsäure. Bei dem Carboxylat handelt es sich dementsprechend vorzugsweise um Formiat, Acetat oder Propionat. Besonders bevorzugt enthält die Lösung Phosphat als Anion und vorzugsweise wird Phosphorsäure zur Bereitstellung dieses Anions verwendet.

Als Lösungsmittel kann jedes geeignete Lösungsmittel verwendet werden. Vorzugsweise wird als Lösungsmittel Wasser, ein Alkohol, eine Ionische Flüssigkeit oder ein Gemisch aus mehreren dieser Lösungsmittel verwendet. Bevorzugte Alkohole zur Verwendung als Lösungsmittel sind Methanol, Ethanol, Propanol und Isopropanol. Bevorzugte Ionische Flüssigkeiten sind aus Kationen und Anionen aufgebaut, wobei die Anionen aus der Gruppe, bestehend aus Chlorid, Bromid, lodid, Methansulfonat, Hydrogensulfat, Octylsulfat, Thiocyanat, p-Toluolsulfonat, Tetrafluoroborat, Hexafluorophosphat, Bis(pentafluoroethyl)phosphinat, Bis[oxalato(2-)]-borat, Bis[1,2-benzoldiolato(2-)-O,O']borat, Trifluoracetat, Trifluorsulfonat, Dicyanamid, Tris(trifluormethylsulfonyl)methid, Bis(trifluormethylsulfonyl)-imid, Tris(pentafluorethyl)trifluorphosphat, Ethylsulfat, Diethylphosphat, 2-(2-Methoxyethoxy)ethylsulfat, Butylsulfat und Kombinationen davon, ausgewählt sind, und die Kationen, aus der Gruppe, bestehend aus monosubstituierten Imidazoliumderivaten, wie 1-Methylimidazolium, disubstituierten Imidazoliumderivaten, wie 1,3-Dimethylimidazolium, 1-Ethyl-3-methylimidazolium, 1-Butyl-3-methylimidazolium, 1-Propyl-3-methylimidazolium, 1-Hexyl-3-methylimidazolium, 3-Methyl-1-octylimidazolium, 1-Decyl-3-methylimidazolium, 1-Dodecyl-3-methylimidazolium, 3-Methyl-1-tetradecylimidazolium, 1-Hexadecyl-3-methylimidazolium, 1-Octadecyl-3-methylimidazolium, 1-Benzyl-3-methylimidazolium, 1-Phenylpropyl-3-methylimidazolium, trisubstituierten Imidazoliumderivaten, wie 1,2,3-Trimethylimidazolium, 1-Ethyl-2,3-dimethylimidazolium, 1-Butyl-2,3-dimethylimidazolium, 1-Propyl-2,3-dimethylimidazolium, 1-Hexyl-2,3-dimethylimidazolium, 1-Hexadecyl-2,3-dimethylimidazolium, Pyridiniumderivaten, wie *N*-Ethylpyridinium, *N*-Butylpyridinium, *N*-Butyl-3,4-dimethylpyridinium, *N*-Butyl-3,5-dimethylpyridinium, *N*-Butyl-3-methylpyridinium, *N*-Butyl-4-methylpyridinium, *N*-Hexylpyridinium, *N*-Octylpyridinium, 1-Ethyl-3-hydroxymethylpyridinium, Pyrrolidiniumderivaten, wie 1,1-Dimethylpyrrolidinium, 1-Ethyl-1-methylpyrrolidinium, 1,1-Dipropylpyrrolidinium, 1,1-Dibutylpyrrolidinium, 1-Butyl-1-methylpyrrolidinium, 1,1-Dihexylpyrrolidinium, 1-Hexyl-1-methylpyrrolidinium, 1-Methyl-1-octylpyrrolidinium, Phosphoniumderivaten, wie Tetrabutylphosphonium, Trihe-xyl(tetradecyl)phosphonium, Ammoniumderivaten, wie Tetramethylammonium, Tetraethylammonium, Tetrabutylammonium, Methyltrioctylammonium, Ethyldimethylpropylammonium, Cyclohexyltrimethylammonium, Ethanolammonium, Guanidiniumderivaten, wie Guanidinium, *N,N,N',N'*-Tetramethyl-*N*"-ethylguanidinium, *N*,*N*,*N*',*N*',*N*"-Pentamethyl-*N*"-propylguanidinium, *N*,*N*,*N*',*N*"-Pentamethyl-*N*"-isopropylguanidinium, Hexamethylguanidinium, Isouroniumderivaten, wie O-Methyl-*N*,*N*,*N*,*N*'-tetramethylisouronium, *S*-Ethyl-*N*,*N*,*N'*,*N'*-tetramethylisothio-uronium, Sulfoniumderivaten, wie Diethylmethethylsulfonium, und Kombinationen davon, ausgewählt sind. Eine als Lösungsmittel besonders bevorzugte Ionische Flüssigkeit ist [MeBu₃N][(SO₂CF₃)₂N].

Der Schritt (b) des erfindungsgemäßen Verfahrens umfasst das Bereitstellen einer Lösung eines löslichen Metallsalzes, welches Metallkationen enthält, die gleich oder verschieden sein können und aus Ca, La oder Zr ausgewählt sind. Als Lösungsmittel kann jedes geeignete Lösungsmittel verwendet werden. Vorzugsweise werden ebenfalls die vorstehend genannten Lösungsmittel, nämlich Wasser, Alkohole, Ionische Flüssigkeiten sowie Gemische aus mehreren dieser Lösungsmittel verwendet. In einer besonders bevorzugten Ausführungsform der vorliegenden Erfindung wird Wasser als Lösungsmittel verwendet. Als Metallsalz kann jedes Salz verwendet werden, das in dem verwendeten Lösungsmittel löslich ist. Geeignete Metallsalze sind dem Fachmann bekannt. Vorzugsweise können als Metallsalze die Halogenide, Nitrate und Sulfate der vorstehend genannten Metalle verwendet werden, sofern diese im jeweils verwendeten Lösungsmittel löslich sind. In einer besonders bevorzugten Ausführungsform der vorliegenden Erfindung wird Lanthantrichlorid oder Zirkonylchlorid als Metallsalz verwendet.

Der Schritt (c) des erfindungsgemäßen Verfahrens umfasst das Vereinigen der beiden Lösungen unter Rühren. Auf diese Weise wird der erfindungsgemäße Kompositleuchtstoff ausgefällt. Bei dem Schritt des Vereinigens können die beiden Lösungen jede geeignete Temperatur aufweisen. In einer bevorzugen Ausführungsform der vorliegenden Erfindung weist zumindest eine der beiden Lösungen oder weisen beide Lösungen eine Temperatur im Bereich von Raumtemperatur bis 85°C auf, besonders bevorzugt eine Temperatur im Bereich von 40°C bis 75°C. Das Vereinigen der beiden Lösungen erfolgt vorzugsweise rasch, d.h. innerhalb eines Zeitraums von nicht mehr als 10 Sekunden, vorzugsweise innerhalb eines Zeitraums von nicht mehr als 5 Sekunden.

Der Schritt (d) des erfindungsgemäßen Verfahrens umfasst das Isolieren und/oder Aufreinigen des ausgefällten Kompositleuchtstoffes. Dieses Isolieren und/oder Aufreinigen kann durch alle geeigneten Verfahren erfolgen. Derartige Verfahren sind im Stand der Technik bekannt.

Vorzugsweise erfolgt das Isolieren und/oder Aufreinigen der Leuchtstoffpartikel durch ein Verfahren, ausgewählt aus der Gruppe, bestehend aus Zentrifugationstechniken, Dialysetechniken, Phasentransfertechniken, Chromatographietechniken, Ultrafiltrationstechniken, Waschtechniken und Kombinationen davon. Beispielsweise kann das Isolieren und Aufreinigen erfolgen, indem das in Schritt (c) erhaltene Reaktionsgemisch bzw. die erhaltene Reaktionsdispersion mit einem der vorstehend beschriebenen Lösungsmittel verdünnt und anschließend zentrifugiert wird. Auf diese Weise ist ein vollständiges Abtrennen des Reaktionsmediums in einfacher Weise möglich. Die vorstehend genannten Verfahren zur Isolierung und/oder Aufreinigung der Leuchtstoffpartikel können auch kombiniert und/oder mehrfach ausgeführt werden.

In einer bevorzugten Ausführungsform umfasst das erfindungsgemäße Verfahren vor oder nach dem Schritt (d) des Isolierens und/oder Aufreinigens des Kompositleuchtstoffes weiter einen Schritt des Beschichtens der Leuchtstoffpartikel mit einer anorganischen Hülle unter Bildung von Kern-Schale-Partikeln ("Core-Shell-Partikel"). Entsprechende Verfahren zur Herstellung von Kern-Schale-Partikeln sind im Stand der Technik bekannt. Dabei ist besonders bevorzugt, dass der Kern den organischen Fluoreszenzfarbstoff enthält, während die Schale keinen organischen Fluoreszenzfarbstoff enthält. Schale und Kern können einerseits aus der gleichen anorganischen Verbindung, andererseits aus verschiedenen anorganischen Verbindungen aufgebaut sein.

Mit dem erfindungsgemäßen Verfahren kann ein Kompositleuchtstoff hergestellt werden, der nanoskalig ist und einen Partikeldurchmesser im Bereich von 1 bis 100 nm aufweist. Besonders bevorzugt wird mit dem erfindungsgemäßen Verfahren ein Kompositleuchtstoff mit einem Partikeldurchmesser im Bereich von 1 bis 20 nm erhalten. Darüber hinaus weist der mit dem erfindungsgemäßen Verfahren erhaltene Leuchtstoff vorzugsweise eine nahezu monodisperse Größenverteilung im Bereich von ±30%, besonders bevorzugt im Bereich von ±5%, auf. Weiterhin weist der mit dem erfindungsgemäßen Verfahren erhaltene Leuchtstoff vorzugsweise einen geringen Agglomerationsgrad auf, besonders bevorzugt mit einer Größenverteilung im Bereich von ±30%, besonders bevorzugt im Bereich von ±5%, auf. Der durch das erfindungsgemäße Verfahren erhaltene Kompositleuchtstoff liegt in der Regel in amorpher Form vor.

Um durch das erfindungsgemäße Verfahren Partikel zu erhalten, die nanoskalig sind, ist es des weiteren vorteilhaft, während des Herstellungsverfahrens das Gleichgewicht zwischen dem endothermen Prozess der Keimbildung und dem exothermen Prozess des Keimwachstums zugunsten der Keimbildung einzustellen. Entsprechende Verfahren sind dem Fachmann beispielsweise aus der Kolloidchemie bekannt. Beispielsweise können dazu die Reaktanden etwas erwärmt werden. Es ist weiterhin aber auch vorteilhaft, die Oberflächen der gebildeten Partikel durch Ladungen zu stabilisieren, um ein mögliches Keimwachstum zu minimieren. Dies kann beispielsweise durch eine geeignete Einstellung des pH-Wertes erfolgen. Darüberhinaus begünstigt ein rasches Vereinigen die Bildung nanoskaliger Partikel.

Das erfindungsgemäße Verfahren zur Herstellung des Kompositleuchtstoffes weist im Vergleich zum Stand der Technik wesentliche Vorteile auf. So ist das erfindungsgemäße Verfahren zur Herstellung des Kompositleuchtstoffes vergleichsweise einfach und besteht aus nur wenigen Verfahrensschritten. Schutzgasbedingungen sowie eine spezielle Kontrolle und Selektion der Partikelgröße sind nicht erforderlich. Mit Hilfe des erfindungsgemäßen Verfahrens sind darüber hinaus auch größere Substanzmengen leicht zugänglich. Zudem sind die zu verwendenden Chemikalien bzw. Elemente im Allgemeinen kostengünstiger also solche, die in den im Stand der Technik bekannten Verfahren zur Herstellung von Leuchtstoffpartikeln eingesetzt werden. Weiterhin kann der Kompositleuchtstoff mit dem erfindungsgemäßen Verfahren mit einheitlicher Partikelgröße und Partikelmorphologie hergestellt werden.

Die vorliegende Erfindung betrifft ferner die Verwendung des erfindungsgemäßen Kompositleuchtstoffes als Markierung, Sicherheitsmerkmal, zu Werbezwecken, zur Beleuchtung, Datenspeicherung und/oder Datenvervielfältigung. Vorzugsweise erfolgt dabei eine Anregung des erfindungsgemäßen Kompositleuchtstoffes mit einer Leuchtdiode. In einer besonders bevorzugten Ausführungsform der vorliegenden Erfindung erfolgt eine Veränderung der Lumineszenzeigenschaften einer Leuchtdiode durch den erfindungsgemäßen Kompositleuchtstoff. Besonders bevorzugt ist die Verwendung für Weißlicht-Leuchtdioden, wobei die Emissionsstrahlung der Leuchtdiode partiell durch den Kompositleuchtstoff absorbiert und nachfolgend so umgewandelt wird, dass als Gesamtemission weißes Licht resultiert.

Die vorliegende Erfindung betrifft ferner die medizinisch-pharmazeutischbiologische Verwendung des erfindungsgemäßen Kompositleuchtstoffes, insbesondere im Bereich der Diagnostik, Therapie, als Kontrastmittel oder als Medikament. Dabei kann der Kompositleuchtstoff beispielsweise in der Form von transparenten, lumineszierenden und biokompatiblen Dispersionen oder Pulver verwendet werden. Gerade für derartige Anwendungen ist das erfindungsgemäße Herstellungsverfahren vorteilhaft, da stark toxische Komponenten während der Synthese vermieden werden können. Derartige lumineszierende Dispersionen oder Pulver können beispielsweise zur Tumordiagnostik, Tumortherapie, zur Markierung von Plaques, zur Zellmarkierung, in FRET-Assays oder in Immuno-Assays verwendet werden.

Die vorliegende Erfindung betrifft ferner die Verwendung des erfindungsgemäßen Kompositleuchtstoffes zur Beschichtung auf oder zur Einbettung in ein Substrat, wobei das Substrat aus der Gruppe, bestehend aus einem Papier-, Polymer-, Glas-, Metall- oder Keramiksubstrat, ausgewählt ist, beispielsweise zur Diagnostik, Therapie, als Kontrastmittel, als Markierung, Sicherheitsmerkmal, zu Werbezwecken, zur Beleuchtung, Datenspeicherung und/oder Datenvervielfältigung.

Besonders bevorzugt ist die Einbettung des Kompositleuchtstoffes in der Form einer transparenten und lumineszierenden Schicht oder Folie. Derartige lumineszierende Schichten oder Folien können beispielsweise als Markierung, Sicherheitsmerkmal, zu Werbezwecken, zur Beleuchtung, Datenspeicherung oder Datenvervielfältigung verwendet werden.

Der erfindungsgemäße Kompositleuchtstoff kann auch in der Form einer Dispersion vorgesehen werden. So weist der erfindungsgemäße Kompositleuchtstoff den Vorteil auf, dass er agglomeratfrei in unterschiedlichen Flüssigkeiten redispergiert werden kann. Das Dispersionsmedium kann jedes geeignete Dispersionsmedium sein. Vorzugsweise ist das Dispersionsmedium aus der Gruppe, bestehend aus Wasser, Aldehyden, Estern, Ethern, Thiolen, wie Dekanthiol, Aromaten, Alkanen, wie Dodekan, Halogenalkanen, Alkoholen, wie Methanol und Ethanol, Polyolen, wie Glycerin und Diethylenglykol, Carbonsäureanhydriden, Aminen, wie Octylamin und Pyridin, Amiden, wie Dimethylformamid, Imiden, Ketonen, Carbon- und Sulfonsäuren, wie Octansäure und Dodecylsulfat, Sulfoxiden, wie Dimethylsulfoxid, Phosphanen, wie Trioctylphosphan (TOP), Phosphanoxiden, wie Trioctylphosphanoxid (TOPO), Phosphaten, wie Octylphosphat, Polymeren, wie Polyacrylaten, Polyaminen, Polyurethanen, Polyharnstoffen, Phenoplasten, Aminoplasten und Epoxidharzen, und Kombinationen davon, flüssigem Ammoniak, flüssigem Schwefeldioxid, flüssigem Kohlendioxid, Lösungen eines Alkali-, Erdalkali-, Ammonium- und Tetramethylammoniumsalzes, wie Halogeniden, Carbonaten, Hydrogencarbonaten, Sulfaten, Hydrogensulfaten, Nitraten, Acetaten, Oxalaten, Acetylacetonaten, Phosphaten in Wasser, einem Alkohol, wie Methanol, Ethanol und Glycerin, oder einem Amin, wie Ethylendiamin, Ethylamin und Pyridin, und Kombinationen davon, ausgewählt. In einer weiteren Ausführungsform können Polymere, wie Polyacrylate, Polyamine, Polyurethane, Polyharnstoffe, Phenoplaste, Aminoplaste und Epoxidharze und Kombinationen davon sowie auch entsprechende Monomervorstufen der genannten Polymere und Kombinationen davon als Dispersionsmedium gewählt werden.

Ein entsprechendes Verfahren zum Herstellen eines beschichteten Substrates umfasst dann die Schritte (a) des (Re)dispergierens des erfindungsmäßen Kompositleuchtstoffes in einem Dispersionsmedium, (b) des Aufbringens der Dispersion auf ein, vorzugsweise transparentes, Substrat, und (c) des Trocknens der auf das Substrat aufgebrachten Dispersion oder das Zulassen, dass die auf das Substrat aufgebrachte Dispersion trocknet. Dabei erfolgt die Aufbringung der Leuchtstoffpartikel auf das Substrat vorzugsweise in der Form einer transparenten und lumineszierenden Beschichtung.
Figur 1 zeigt das Absorptionsspektrum und das Emissionsspektrum eines erfindungsgemäßen nanoskaligen Kompositleuchtstoffes, hergestellt gemäß nachstehendem Beispiel 3.
Figur 2 zeigt die IR-Spektren aller beteiligten Komponenten im System Zr-PO₄-FMN: ZrO(HPO₄); "FMN-dotiertes ZrO(HPO₄)"; "ZrO(FMN)"; reiner Fluoreszenzfarbstoff FMN; vgl. nachstehendes Beispiel 3.

Die vorliegende Erfindung wird durch die nachstehenden, nicht-beschränkenden Beispiele weiter erläutert.

### Beispiele:

### Beispiel 1: Riboflavinphosphat Zirkoniumsalz: Zr(HPO₄)₂₋ₓ(FMN)ₓ: mit x = 2 / "Zr(FMN)₂"

160 mg Zr(OC₂H₅)₄ wurden in 10 ml Methanol gelöst (Lösung 1). In 30 ml H₂O wurden 300 mg Riboflavin 5'-monophosphatnatriumsalz (Fluka 85%) gelöst (Lösung 2). Lösung 1 wurde unter starkem Rühren bei Raumtemperatur schnell zu Lösung 2 gegeben. Nach 2 min Rühren wurde abzentrifugiert (25000 RPM, 15 min) und in H₂O resuspendiert. Nach erneutem Abzentrifugieren wurde auf diese Weise ein weiteres Mal mit H₂O gewaschen und abermals abzentrifugiert. Es wurde eine stabile Suspension erhalten, indem der gewaschene Feststoff mittels Ultraschallbad in Ethanol resuspendiert und dann 2 min bei 25000 RPM zentrigugiert wurde. Das Zentrifugat enthält nanoskalige, amorphe Zirkonium-Riboflavinphosphat Partikel der Zusammensetzung Zr(FMN)₂ mit FMN = Riboflavinmononukleotid bzw. Riboflavinmonophosphat. Es wurde ein Kompositleuchtstoff erhalten, bestehend aus Riboflavinphosphat als organischem Fluoreszenzfarbstoff und Zr⁴⁺ als anorganischem Matrixbildner.

### Beispiel 2: Riboflavinphosphat Zirkoniumsalz: ZrO(HPO₄)₁₋ₓ(FMN)ₓ mit x = 1 / "ZrO(FMN)"

100 mg ZrOCl₂ · 8H₂O wurden in 10 ml H₂O gelöst (Lösung 1). In 30 ml H₂O wurden 300 mg Riboflavin 5'-monophosphatnatriumsalz (Fluka 85%) gelöst (Lösung 2). Lösung 1 wurde unter starkem Rühren bei Raumtemperatur schnell zu Lösung 2 gegeben. Nach 2 min Rühren wurde abzentrifugiert (25000 Upm, 15 min) und in H₂O resuspendiert. Nach erneutem Abzentrifugieren wurde auf diese Weise ein weiteres mal mit H₂O gewaschen und abermals abzentrifugiert. Eine stabile Suspension erhält man, indem man den gewaschenen Feststoff mittels Ultraschallbad in Ethanol resuspendiert und dann 2 min bei 25000 Upm zentrigugiert. Das Zentrifugat enthält nanoskalige, amorphe Zirkonium-Riboflavinphosphat Partikel der Zusammensetzung ZrO(FMN) mit FMN = Riboflavinmonophosphat. Es wurde ein Kompositleuchtstoff erhalten, bestehend aus Riboflavinphosphat als organischem Fluoreszenzfarbstoff und Zr⁴⁺ als anorganischem Matrixbildner.

### Beispiel 3: Riboflavinphosphat dotiertes Zirkoniumphosphat: ZrO(HPO₄)₁₋ₓ(FMN)ₓ: mit x = 0,1 / "FMN-dotiertes ZrO(HPO₄)"

Es wurden 21 mg H₃PO₄ (85%) und 0,2 ml einer Riboflavin 5'-monophosphatnatriumsalz-Lösung (Fluka 85%, 50 mg / 1 ml H₂O) gemischt. Anschließend wurden 2 ml H₂O und 8 ml Methanol zugefügt. Diese klare Lösung wurde zu 25 ml [MeBu₃N][(SO₂CF₃)₂N] gegeben und die entstehende Trübung mit 10 ml Ethanol wieder gelöst (Lösung 1). 39 mg ZrOCl₂ · 8H₂O wurden in 0,5 ml Methanol gelöst (Lösung 2). Lösung 1 wurde auf 70°C erwärmt und stark gerührt (ca. 1000 Upm). Anschließend wurde Lösung 2 schnell zugegeben. Nach 30 min rühren wurde abzentrifugiert und der resultierende Feststoff durch resuspendieren und zentrifugieren mit Ethanol, H₂O (2 mal) und Ethanol gewaschen. Das Zentrifugat enthält nanoskalige, amorphe Zirkonium-Riboflavinphosphat Partikel der Zusammensetzung ZrO(HPO₄)₁₋ₓ(FMN)ₓ: mit x = 0,1 / "FMN-dotiertes ZrO(HPO₄) mit FMN = Riboflavinmononucleotid bzw. Riboflavinmonophosphat. Es wurde ein Kompositleuchtstoff erhalten, bestehend aus Riboflavinphosphat als organischem Fluoreszenzfarbstoff und Zirkonhydrogenphosphat als anorganischer Matrix.

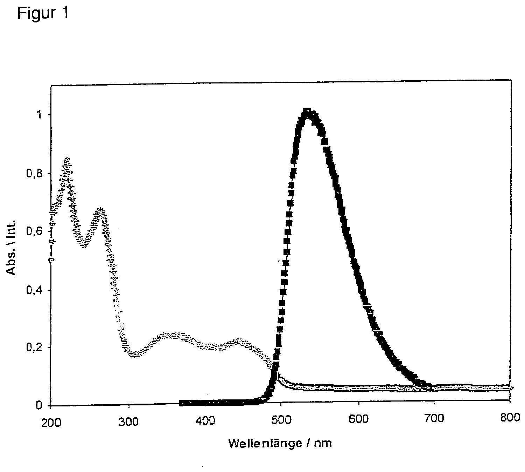

In Figur 1 ist das Absorptionsspektrum (grau) sowie das Emissionsspektrum (schwarz) des gemäß Beispiel 3 erhaltenen Zirkonphosphat-Riboflavin-Kompositleuchtstoffes gezeigt.

Ausgehend von Zr(HPO₄)₂ bzw. ZrO(HPO₄) gelingt dabei ein teilweiser Austausch des Phosphats gegen Riboflavinmonophosphat mit x ∼ 0,1 ("FMN-dotiertes Zr(HPO₄)₂" bzw. "FMN-dotiertes ZrO(HPO₄)"), aber auch ein vollständiger Ersatz des Phosphats mit x = 2 ("Zr(FMN)₂") bzw. x = 1 ("ZrO(FMN)"). Insgesamt kann x zwischen 0 und 2 bzw. 0 und 1 beliebig variiert werden. Dies ist bedingt durch die Schichtstruktur des Zirkonphosphats, die hier sehr "tolerant" ist. Anhand analytischer Daten (z.B. Verbrennungsanalyse, Thermogravimetrie, Energiedispersive Röntgenanalytik) kann die Zusammensetzung der nicht kristallinen Verbindung im System Zr-PO₄ eingegrenzt werden auf:
- idealisierte Formelzusammensetzung: Zr(HPO₄)₂₋ₓ(FMN)ₓ mit x = 0-2 mit FMN: Riboflavinmonophosphat
   bzw.
- idealisierte Formelzusammensetzung: ZrO(HPO₄)₁₋ₓ(FMN)ₓ mit x = 0-1 mit FMN: Riboflavinmonophosphat

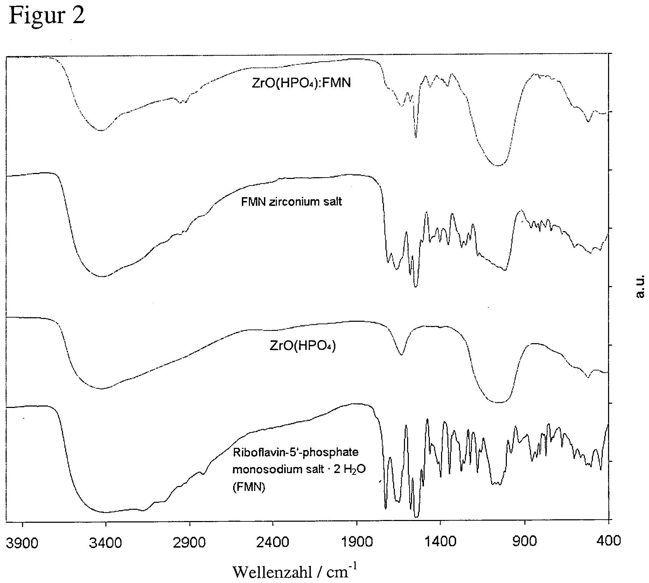

Figur 2 zeigt die IR-Spektren aller beteiligten Komponenten im System Zr-PO₄-FMN: ZrO(HPO₄); "FMN-dotiertes ZrO(HPO₄)"; "ZrO(FMN)"; reiner Fluoreszenzfarbstoff FMN.

### Beispiel 4: Perylen-3,4,9,10-tetracarbonsäure Calciumsalz

50 mg Ca(NO₃)₂ • 4 H₂O wurden in 5 ml H₂O gelöst (Lösung 1). In 30 ml H₂O wurden 55 mg Perylen-3,4,9,10-tetracarbonsäure tetranatriumsalz gelöst (Lösung 2). Lösung 1 wurde unter starkem Rühren bei Raumtemperatur schnell zu Lösung 2 gegeben. Nach 2 min Rühren wurde abzentrifugiert (25000 Upm, 15 min) und in H₂O resuspendiert. Nach erneutem Abzentrifugieren wurde auf diese Weise ein weiteres mal mit H₂O gewaschen und abermals abzentrifugiert. Eine stabile Suspension erhält man, indem man den gewaschenen Feststoff mittels Ultraschallbad in Ethanol resuspendiert und dann 2 min bei 25000 RPM zentrigugiert. Das Zentrifugat enthält nanoskalige Partikel. Es wurde ein Kompositleuchtstoff erhalten, bestehend aus Perylen-3,4,9,10-tetracarbonsäure als organischem Fluoreszenzfarbstoff und Ca²⁺ als anorganischem Matrixbildner.

Solche Kompositleuchtstoffe mit Perylen als organischem Fluoreszenzfarbstoff sind aufgrund dessen extrem hoher Quantenausbeute (> 95 %) besonders interessant.

### Beispiel 5: Lanthanphosphat mit Riboflavin

185 mg LaCl₃·6H₂O wurden in 10 ml H₂O gelöst (Lösung 1). In 30 ml H₂O wurden 300 mg Riboflavin 5'-monophosphatnatriumsalz und 20 mg H₃PO₄ (85%) gelöst (Lösung 2). Lösung 1 wurde unter starkem Rühren bei Raumtemperatur schnell zu Lösung 2 gegeben. Nach 2 min Rühren wurde abzentrifugiert (25000 Upm, 15 min) und in H₂O resuspendiert. Nach erneutem Abzentrifugieren wurde auf diese Weise erneut mit H₂O gewaschen und abermals abzentrifugiert. Es wurde eine stabile Suspension erhalten, indem der gewaschene Feststoff mittels Ultraschallbad in Ethanol resuspendiert und dann 2 min bei 25000 Upm zentrifugiert wurde. Das Zentrifugat enthielt einen Kompositleuchtstoff, bestehend aus kristallinem Lanthanphosphat (LaPO₄) als anorganischer Matrix und Riboflavin als organischem Fluoreszenzfarbstoff.

### Beispiel 6: Tetra(o-amidophosphonatophenyl)porphyrin-Zirkoniumsalz

Es wurden 65 mg Tetra(o-amidophosphonatophenyl)porphyrin-Tetranatriumsalz (0,06 mmol) in 5 ml EtOH, 5 ml MeOH und 3 ml H₂O gelöst. Diese klare Lösung wurde zu 15 ml [MeBu₃N][(SO₂CF₃)₂N] gegeben und die entstehende Trübung mit 5,5 ml MeOH wieder gelöst (Lösung 1). 20 mg ZrOCl₂ · 8 H₂O (0,06 mmol) wurden in 1,5 ml Methanol gelöst (Lösung 2).

Lösung 1 wurde auf 40°C erwärmt und stark gerührt (ca. 1000 Upm). Anschließend wurde Lösung 2 schnell zugegeben. Nach 20 min rühren wurde abzentrifugiert und der resultierende Feststoff durch resuspendieren und zentrifugieren mit Ethanol und H₂O (3 mal) gewaschen. Es wurde ein Kompositleuchtstoff erhalten, bestehend aus Tetra(o-amidophosphonatophenyl)porphyrin als organischem Fluoreszenzfarbstoff und Zr⁴⁺ als anorganischem Matrixbildner.

### Beispiel 7: Umbelliferonphosphat-Zirkoniumsalz

Es wurden 26 mg Umbelliferonphosphat-Dinatriumsalz (0,1 mmol) in 5 ml EtOH, 5 ml MeOH und 3 ml H₂O gelöst. Diese klare Lösung wurde zu 15 ml [Me-Bu₃N][(SO₂CF₃)₂N] gegeben und die entstehende Trübung mit 5,5 ml MeOH wieder gelöst (Lösung 1). 20 mg ZrOCl₂ · 8 H₂O (0,06 mmol) wurden in 1,5 ml Methanol gelöst (Lösung 2).

Lösung 1 wurde auf 40°C erwärmt und stark gerührt (ca. 1000 Upm). Anschließend wurde Lösung 2 schnell zugegeben. Nach 20 min rühren wurde abzentrifugiert und der resultierende Feststoff durch resuspendieren und zentrifugieren mit Ethanol und H₂O (3 mal) gewaschen. Es wurde ein Kompositleuchtstoff erhalten, bestehend aus Umbelliferonphosphat als organischem Fluoreszenzfarbstoff und Zr⁴⁺ als anorganischem Matrixbildner.

## Patentansprüche

1. Kompositleuchtstoff, umfassend eine anorganische Matrix und einen organischen Fluoreszenzfarbstoff,
wobei die anorganische Matrix aus einer Verbindung, ausgewählt aus CaCO₃, LaPO₄, ZrO(HPO₄), ZrO(H₂PO₄)₂, und Zr₃(PO₄)₄, einschließlich Zr(HPO₄)₂ bzw. Zr(H₂PO₄)₄, aufgebaut ist, und
wobei der organische Fluoreszenzfarbstoff eine oder mehrere funktionelle Gruppen, ausgewählt aus Sulfatgruppen, Phosphatgruppen, Phosphonsäuregruppen, Phosphansäuregruppen oder Carboxylatgruppen, aufweist, über welche der Fluoreszenzfarbstoff mittels ionischer Bindung in die anorganische Matrix eingebaut ist, und
wobei der organische Fluoreszenzfarbstoff aus der Gruppe, bestehend aus Riboflavin-5'-monophosphatnatriumsalz, Perylen, Cumarin und Umbelliferon, wobei letztere mit mindestens einer Sulfatgruppe, Phosphatgruppe, Phosphonsäuregruppe, Phosphansäuregruppe oder Carboxylatgruppe funktionalisiert worden sind, ausgewählt ist.

2. Kompositleuchtstoff nach Anspruch 1, wobei die anorganische Matrix kristallin ist.

3. Kompositleuchtstoff nach Anspruch 1, wobei die anorganische Matrix röntgenamorph ist.

4. Kompositleuchtstoff nach einem der Ansprüche 1 bis 3, wobei die funktionelle Gruppe, über welche der Fluoreszenzfarbstoff in die anorganische Matrix eingebaut ist, aus der Gruppe, bestehend aus -COOH, -P(O)₂OH, -OP(O)₂OH, -S(O)₂OH bzw. deren Anionen, ausgewählt ist.

5. Kompositleuchtstoff nach einem der vorherhehenden Ansprüche 1 bis 4, basierend auf Zr(HPO₄)₂₋ₓ(FMN)ₓ mit x = 0-2 und FMN = Riboflavinmonophosphat oder ZrO(HPO₄)₁₋ₓ(FMN)ₓ mit x = 0-1 und FMN= Riboflavinmonophosphat, insbesondere Zr(HPO₄)₂₋ₓ(FMN)ₓ mit x = 2 ("Zr(FMN)₂"), ZrO(HPO₄)₁₋ₓ(FMN)ₓ mit x = 1 ("ZrO(FMN)") und ZrO(HPO₄)₁₋ₓ(FMN)ₓ mit x = 0,1 ("FMN-dotiertes ZrO(HPO₄)").

6. Kompositleuchtstoff nach einem der Ansprüche 1 bis 5, wobei die anorganische Matrix weiter mit einem oder mehreren Kationen und/oder Anionen dotiert ist.

7. Kompositleuchtstoff nach Anspruch 6, wobei die anorganische Matrix mit einem Lanthanoid, ausgewählt aus Ce, Pr, Nd, Sm, Eu, Gd, Tb, Dy, Ho, Er, Tm, Yb oder Lu, einem Übergangsmetall, ausgewählt aus Cr, Mn, Cu, Zn, Y, Ag oder Cd, einem Hauptgruppenelement, ausgewählt aus Sn, Sb, Pb oder Bi, oder einem komplexen Anion, ausgewählt aus [VO₄]³⁻, [MoO₄]³⁻ oder [WO₄]³⁻, dotiert ist.

8. Kompositleuchtstoff nach einem der Ansprüche 1 bis 7, wobei der Kompositleuchtstoff einen Partikeldurchmesser im Bereich von 1 bis 100 nm aufweist.

9. Verfahren zur Herstellung des Kompositleuchtstoffes nach einem der Ansprüche 1 bis 8, umfassend die Schritte
(a) das Bereitstellen einer Lösung eines organischen Fluoreszenzfarbstoffes, der eine oder mehrere funktionelle Gruppen, ausgewählt aus Sulfatgruppen, Phosphatgruppen, Phosphonsäuregruppen, Phosphansäuregruppen oder Carboxylatgruppen, aufweist, wobei die Lösung gegebenenfalls weiter mindestens ein Anion, ausgewählt aus Sulfat, Phosphat, Carbonat oder Carboxylat enthält,
(b) das Bereitstellen einer Lösung eines löslichen Metallsalzes, enthaltend Metallkationen, die gleich oder verschieden sein können und aus Ca, La, und Zr ausgewählt sind,
(c) das Vereinigen der beiden Lösungen unter Rühren, um den Kompositleuchtstoff auszufällen, und
(d) das Isolieren und/oder Aufreinigen des ausgefällten Kompositleuchtstoffes.

10. Verwendung des Kompositleuchtstoffes nach einem der Ansprüche 1 bis 8 zur Beschichtung auf oder zur Einbettung in ein Substrat, wobei das Substrat aus der Gruppe, bestehend aus einem Papier-, Polymer-, Glas-, Metall- oder Keramiksubstrat, ausgewählt ist, beispielsweise zur Diagnostik, Therapie, als Kontrastmittel, als Markierung, Sicherheitsmerkmal, zu Werbezwecken, zur Beleuchtung, Datenspeicherung und/oder Datenvervielfältigung.

## Claims

1. A composite luminophore comprising an inorganic matrix and an organic fluorescent dye,
wherein the inorganic matrix is formed from a compound selected from of CaCO₃, LaPO₄, ZrO(HPO₄), ZrO(H₂PO₄)₂, Zr₃(PO₄)₄, including Zr(HPO₄)₂ and Zr(H₂PO₄)₄, respectively,
wherein the organic fluorescent dye has one or more functional groups selected from sulfate groups, phosphate groups, phosphonic acid groups, phosphinic acid groups, or carboxylate groups, by means of which the fluorescent dye is incorporated into the inorganic matrix through ionic bonding,
wherein the organic fluorescent dye is selected from the group consisting of riboflavin 5'-monophosphate sodium salt, perylene, coumarin and umbelliferone, wherein the latter have been functionalized with at least a sulfate group, a phosphate group, a phosphonic acid group, a phosphinic acid group, or a carboxylate group.

2. The composite luminophore according to claim 1, wherein the inorganic matrix is crystalline.

3. The composite luminophore according to claim 1, wherein the inorganic matrix is x-ray-amorphous.

4. The composite luminophore according to any one of claims 1 to 3, wherein the functional group through which the fluorescent dye is incorporated into the inorganic matrix is selected from the
group consisting of -COOH, -P(O)₂OH, -OP(O)₂OH, -S(O)₂OH and anions thereof.

5. The composite luminophore according to any one of claims 1 to 4, wherein the composite luminophore is based on Zr(HPO₄)₂₋ₓ(FMN)ₓ, where x is 0-2 and FMN is riboflavin monophosphate, or ZrO(HPO₄)₁₋ₓ(FMN)ₓ, where x is 0-1 and FMN is riboflavin monophosphate, particularly Zr(HPO₄)₂₋ₓ(FMN)ₓ, where x is 2 ("Zr(FMN)₂") ; ZrO(HPO₄)₁₋ₓ(FMN)ₓ, where x is 1 ("ZrO(FMN)") ; and ZrO(HPO₄)₁₋ₓ(FMN)ₓ, where x = 0.1 ("FMN-doped ZrO(HPO₄)").

6. The composite luminophore according to any one of claims 1 to 5, wherein the inorganic matrix is further doped with one or more cations and/or anions.

7. The composite luminophore according to claim 6, wherein the inorganic matrix has been doped with a lanthanoid selected from the group consisting of Ce, Pr, Nd, Sm, Eu, Gd, Tb, Dy, Ho, Er, Tm, Yb and Lu; a transition metal selected from the group consisting of Cr, Mn, Cu, Zn, Y, Ag and Cd; a main group element selected from the group consisting of Sn, Sb, Pb and Bi; a complex anion selected from the group consisting of [VO₄]³⁻, [MoO₄]³⁻ and [WO₄]³⁻; or combinations thereof.

8. The composite luminophore according to any one of claims 1 to 7, wherein the composite luminophore has a particle diameter ranging from 1 to 100 nm.

9. A process for preparing the composite luminophore according to any one of claims 1 to 8, comprising the steps of
(a) providing a solution of an organic fluorescent dye having one or more functional groups selected from sulfate groups, phosphate groups, phosphonic acid groups, phosphinic acid groups, or carboxylate groups, the solution optionally further containing an anion selected from sulfate, phosphate, carbonate or carboxylate,
(b) providing a solution of a soluble metal salt comprising metal cations which may be the same or different and are selected from Ca, La, and Zr, and
(c) combining the two solutions while stirring to precipitate the composite luminophore, and
(d) isolating and/or purifying the precipitated composite luminophore.

10. Use of the composite luminophore according to any one of claims 1 to 8, for coating on or for embedding in a substrate, the substrate being selected from the group consisting of a paper, polymer, glass, metal or ceramic substrate, for example for diagnostics, therapy, as a contrast medium, as a marking, security feature , for advertising purposes, for lighting, data storage and / or data duplication

## Revendications

1. Substance luminescente composite, comprenant une matrice inorganique et un colorant fluorescent organique,
dans laquelle la matrice inorganique est constituée d'un composé sélectionné parmi les CaCO₃, LaPO₄, ZrO(HPO₄), ZrO(H₂PO₄)₂ et Zr₃(PO₄)₄, y compris ZrO(H₂PO₄)₂ ou Zr(H₂PO₄)₄, et
le colorant fluorescent organique présentant un ou plusieurs groupements fonctionnels sélectionnés parmi les groupements sulfate, les groupements phosphate, les groupements acide phosphonique, les groupements acide phosphinique ou les groupements carboxylate, par le biais desquels le colorant fluorescent est intégré par liaison ionique dans la matrice inorganique, et
le colorant fluorescent organique étant sélectionné parmi le groupe consistant en sel de riboflavin-5'-monophosphatesodique, pérylène, cumarin et umbelliféron, ces derniers étant fonctionnalisés par au moins un groupement sulfate, un groupement phosphate, un groupement acide phosphonique, un groupement acide phosphinique ou un groupement carboxylate.

2. Substance luminescente composite selon la revendication 1, dans laquelle la matrice inorganique est cristalline.

3. Substance luminescente composite selon la revendication 1, dans laquelle la matrice inorganique est amorphe aux rayons X.

4. Substance luminescente composite selon l'une des revendications 1 à 3, dans laquelle le groupe fonctionnel par le biais duquel le colorant fluorescent est intégré dans la matrice inorganique est sélectionné parmi le groupe consistant en -COOH, -P(O)₂OH, -OP(O)₂OH, -S(O)₂OH ou leurs anions.

5. Substance luminescente composite selon l'une des revendications précédentes 1 à 4, à base de Zr(HPO₄)₂₋ₓ(FMN)x, où x = 0-2 et FMN = monophosphate de riboflavine ou ZrO(HPO₄)₁₋ₓ(FMN)ₓ, où x = 0-1 et FMN = monophosphate de riboflavine, en particulier Zr(HPO₄)₂₋ₓ(FMN)ₓ où x = 2 ("Zr(FMN)₂"), ZrO(HPO₄)₁₋ₓ(FMN)ₓ où x = 1 ("ZrO(FMN)") et ZrO(HPO₄)₁₋ₓ(FMN)ₓ où x = 0,1 ("ZrO(HPO₄) dopé au FMN").

6. Substance luminescente composite selon l'une des revendications 1 à 5, dans laquelle la matrice inorganique est en outre dopée avec un ou plusieurs cations et/ou anions.

7. Substance luminescente composite selon la revendication 6, dans laquelle la matrice inorganique est dopée avec un lanthanide sélectionné parmi Ce, Pr, Nd, Sm, Eu, Gd, Tb, Dy, Ho, Er, Tm, Yb ou Lu, un métal de transition sélectionné parmi Cr, Mn, Cu, Zn, Y, Ag ou Cd, un élément des groupements principaux sélectionné parmi Sn, Sb, Pb ou Bi, ou un anion complexe sélectionné parmi [VO₄]³⁻, [MoO₄]³⁻ ou [WO₄]³⁻.

8. Substance luminescente composite selon l'une des revendications 1 à 7, dans laquelle la substance luminescente composite présente un diamètre particulaire dans l'intervalle compris entre 1 et 100 nm.

9. Procédé de fabrication de la substance luminescente composite selon l'une des revendications 1 à 8, comprenant les étapes suivantes:
(a) la fourniture de la solution d'un colorant fluorescent organique qui présente un ou plusieurs groupements fonctionnels sélectionnés parmi les groupements sulfate, les groupements phosphate, les groupements acide phosphonique, les groupement acide phosphinique ou les groupements carboxylate, la solution contenant éventuellement encore au moins un anion sélectionné parmi le sulfate, le phosphate, le carbonate ou le carboxylate,
(b) la fourniture de la solution d'un sel de métal soluble, contenant des cations métalliques, lesquels peuvent être identiques ou différents et sont sélectionnés parmi le Ca, le La et le Zr,
(c) la réunion des deux solutions sous agitation, pour précipiter la substance luminescente composite, et
(d) la séparation et/ou la purification de la substance luminescente composite précipitée.

10. Utilisation de la substance luminescente composite selon l'une des revendications 1 à 8 pour le revêtement sur un substrat ou l'intégration dans celui-ci, le substrat étant sélectionné parmi le groupe consistant en un substrat de papier, de polymère, de verre, de métal ou de céramique, par exemple pour le diagnostic, la thérapie comme agent de contraste, comme marquage, comme marquage de sécurité, à des fins de publicité, d'éclairage, pour le stockage de données et/ou la reproduction de données.
